# EUROPÄISCHE PATENTSCHRIFT

(11) **EP 1 920 387 B1**
(45) Veröffentlichungstag und Bekanntmachung des Hinweises auf die Patenterteilung: **01.07.2015**
(21) Anmeldenummer: 06791750.0
(22) Anmeldetag: 31.08.2006
(51) Int. Cl.: G06K 15/12, G02F 1/11, G02F 1/33

(54) **VORRICHTUNG ZUR OPTISCHEN AUFSPALTUNG UND MODULATION VON ELEKTROMAGNETISCHER STRAHLUNG**
DEVICE FOR THE OPTICAL SPLITTING AND MODULATION OF ELECTROMAGNETIC RADIATION
DISPOSITIF POUR DIVISER ET MODULER OPTIQUEMENT UN RAYONNEMENT ELECTROMAGNETIQUE

(30) Priorität: 31.08.2005 DE 102005041440
(43) Veröffentlichungstag der Anmeldung: 14.05.2008
(73) Patentinhaber: Heidelberg Instruments Mikrotechnik GmbH, D-69126 Heidelberg (DE)
(72) Erfinder: SCHWEITZER, Michael, 68163 Mannheim (DE); JEHLE, Joachim, 69126 Heidelberg (DE)
(74) Vertreter: Schmitt, Meinrad
(86) Internationale Anmeldenummer: PCT/EP2006/008508
(87) Internationale Veröffentlichungsnummer: WO 2007/025748

(56) Entgegenhaltungen:
- WO-A-00/52520
- WO-A-99/03016
- US-A- 4 233 612
- US-A- 5 890 789

## Beschreibung

Die Erfindung bezieht sich auf eine Vorrichtung zur optischen Aufspaltung und Modulation von elektromagnetischer, insbesondere monochromatischer kohärenter Strahlung gemäß den im Oberbegriff des Patentanspruchs 1 angegebenen Merkmalen.

Aus der US-A-4 233 612 ist eine derartige Vorrichtung mit einem akustisch-optischen Modulator bekannt, mit welchem ein Laserstrahl moduliert wird und welcher von einem Oszillator über einen Verstärker angesteuert wird. Der Oszillator schwingt mit einer Frequenz und wird über ein vorgeschaltetes Gatter getaktet, und zwar entsprechend seriellen Ausgangsdaten eines Schieberegisters und Taktsignalen eines Zeitschaltkreises. Der einfallende Laserstrahl wird entsprechend den digitalen Ansteuerungsdaten moduliert bzw. durchgeschaltet oder gesperrt und einem nachgeordneten akustisch-optischen Element zur Ablenkung des Strahls zugeführt.

Spannungsfrequenzwandler und einen Mischverstärker beaufschlagt. Aufgrund welche unerwünschte Intensitätsverschiebungen der aufgespalteten Teilstrahlen

Ferner ist aus der WO 00/52520 A eine Vorrichtung mit zwei akustisch-optischen Modulatoren bekannt, welche gemeinsam von einem Signalfrequenzgenerator mit elektrischen Signalen beaufschlagt werden. Im ersten akustisch-optischen Modulator wird ein Eintrittsstrahlungsfeld aufgeteilt in einen transmittierten ersten Ast sowie in einen gebeugten zweiten Ast, und zwar unter einem Beugungswinkel a. In einem nachgeordneten Strahlenführungssystem werden beide Äste umgelenkt und einem zweiten akustisch-optischen Modulator zugeführt, mittels welchem zwei Austrittsstrahlungsfelder gebildet werden. Mit dieser Modulationseinrichtung soll ein möglichst effizientes Schalten des Eintrittsstrahlungsfeldes zwischen den genannten beiden Austrittsstrahlungsfeldern ermöglicht werden. Weiterhin offenbart die WO 99/03016 A eine Vorrichtung mit einem akustisch-optischen Modulator, welcher als zweidimensionales Modulator-Array ausgebildet ist und räumlich getrennt nebeneinander liegende Kristallgitterbereiche entsprechend beabstandet zueinander angeordneten Elektroden aufweist.

Vorrichtungen der genannten Art gelangen zur optischen Aufspaltung von Strahlen, insbesondere Lichtstrahlen und / oder Laserstrahlen, zum Einsatz, beispielsweise als optischer Schalter bzw. optischer Modulator, wie vor allem in Laserdruckern oder Lithografiesystemen. Solche Vorrichtungen, in welchen ein Strahl und / oder Licht, z. B. ein Laserstrahl, mit Hilfe eines akustisch-optischen Elements in eine Vielzahl von Strahlen aufgespalten wird, wobei das akustisch-optische Element von einer Vielzahl elektrischer Signale mit verschiedenen Frequenzen angesteuert wird, um den Strahl in verschiedene Strahlen aufzuteilen, ermöglichen es, z.B. beim Einsatz in Laserdruckern oder Lithografiemaschinen, eine Vielzahl von Laserstrahlen sowohl in ihrer Energie als auch in Ihrer Position zu beeinflussen, was einen erheblichen Vorteil bezüglich der Geschwindigkeit gegenüber digkeit genenüber konventionellen Maschinen bedeutet, die nur mit einem einzelnen Laserstrahl arbeiten. Trotzdem treten bei der Verwendung eines akustisch-optischen Elements zur Erzeugung mehrerer Laserstrahlen eine Reihe von Problemen auf. Eines der größten Problem ist dabei, dass die Energie der in einem akustisch-optischen Element gebeugten Strahlen mit der Anzahl der erzeugten Strahlen und damit der Anzahl der an das akustisch-optische Element angelegten Frequenzen variiert, was zu einer Veränderung der einzelnen Strahlenergien führt. Eine zeitliche Veränderung der Strahlenenergien tritt außerdem dadurch auf, dass bei der Verwendung mehrerer Frequenzen, die gleichzeitig in ein akustisch-optisches Element eingespeist werden, Schwebungen zwischen den einzelnen Frequenzen auftreten, was zu periodischen Energieschwankungen der einzelnen Strahlen führt. Durch diese Phänomene wird die Qualität der Maschinen stark beeinträchtigt.

So kann beispielsweise das Problem auftreten, dass sich die Amplituden eines elektrischen Signals in einem akustisch-optischen Element nicht linear verändern und außerdem durch Schwebungseffekte der einzelnen Frequenzen untereinander periodische Veränderungen der Signalamplitude auftreten. Dies führt zu einem sehr hohen Aufwand bezüglich der Genauigkeit und Geschwindigkeit der Amplitudenkontrolle, die eine in situ Kontrolle der Strahlenergien über die Signalamplituden quasi unmöglich macht. Nichtlineare optische und elektronische Effekte, die aufgrund der Überlagerung der einzelnen Frequenzen entstehen, führen außerdem zum Auftreten von Mischfrequenzen höherer Ordnung, die zusätzliche gebeugte Laserstrahlen erzeugen und sich störend auf den Schreib- bzw. Belichtungsprozess in einem Laserdrucker bzw. einem Laserlithographiesystem auswirken.

Aus der US 5,890,789 ist eine derartige Vorrichtung bekannt, welche als Strahlenquelle einer monochromatischen kohärenten elektromagnetischen Strahlung eine Laserquelle enthält, deren Licht bzw. Laserstrahl mit Hilfe eines akustisch-optischen Elements in eine Vielzahl von Strahlen aufgespalten wird, wobei das akustisch-optische Element von einer Vielzahl elektrischer Signale mit verschiedenen Frequenzen angesteuert wird, um den Laserstrahl in verschiedene Strahlen aufzuteilen bzw. aufzuspalten. Hierzu sind ein Signalgenerator, ein Bildbearbeitungsprozessor, ein Modulationsschaltkreis sowie ein Schaltkreis zur Intensitätskontrolle vorgesehen, um einerseits die Aufspaltung des Laserstrahls in eine Vielzahl von Strahlen zu ermöglichen und andererseits die Energie der erzeugten Strahlen konstant zu halten. Der Schaltkreis zur Intensitätskontrolle kontrolliert in Abhängigkeit von der Anzahl der zu erzeugenden Strahlen die Lichtintensität der Laserquelle und sorgt dafür, dass die Lichtintensität der Laserquelle proportional zur Anzahl der erzeugten Strahlen ist, damit deren Intensitäten unabhängig von der Anzahl der erzeugten Laserstrahlen konstant gehalten werden können. Durch das Konstanthalten der Intensitäten der einzelnen Laserstrahlen über eine Regelung der Laserquelle soll erreicht werden, dass die Amplitudensignale der elektrischen Signale des genannten Signalgenerators konstant gehalten werden können und somit Änderungen des Schwebungsverhaltens des akustisch-optischen Systems aufgrund einer Amplitudenveränderung verhindert werden. Allerdings tritt bei der genannten Vorrichtung das Problem auf, das zum einen die Regelung der Laserquelle mit einer hohen Geschwindigkeit, wie es beispielsweise in kommerziellen Laserlithografiesystemen notwendig ist, nur für sehr wenige Lasertypen möglich ist, und daher die Einsatzfähigkeit der Vorrichtung sehr beschränkt ist. Zum anderen bleibt der eingangs erläuterte Effekt erhalten, dass aufgrund der Überlagerung der einzelnen Frequenzen Schwebungsfrequenzen höherer Ordnung im akustisch-optischen Element auftreten, welche zusätzliche gebeugte Laserstrahlen erzeugen, die Laserenergie periodisch beeinflussen und sich störend auf den Schreib- bzw. Belichtungsprozess, beispielsweise in einem Laserdrucker oder einem Laserlithografiesystem auswirken.

In einem alternativen Ausführungsbeispiel der US 5,890,789 ist ein mechanischer Shutter vorgesehen, mittels welchem mehrere aufeinander folgende Strahlen ausgeblendet werden können, um den Laserstrahl in eine Vielzahl von Strahlen aufzuspalten und die Energie der erzeugten Strahlen konstant zu halten. Hierbei soll unabhängig von der Anzahl der Strahlen, welche zum Schreiben eines Datensatzes, beispielsweise in einem Laserdrucker oder einem Laserlithografiesystem, verwendet werden, die Anzahl der an das akustisch-optische Element angelegten Frequenzen durch Ausblenden nicht verwendeter Strahlen mit Hilfe des Shutters konstant zu halten und dadurch die Intensitäten der verwendeten Strahlen unabhängig von der Anzahl der erzeugten Laserstrahlen konstant gehalten werden. Dies führt allerdings zu weiteren Problemen, die sich störend auf den Schreib- bzw. Belichtungsprozess, beispielsweise in einem Laserdrucker oder einem Laserlithografiesystem auswirken. Aufgrund der höheren Anzahl der verwendeten Frequenzen werden die bereits beschriebenen Schwebungsphänomene verstärkt und durch die erhöhte Anzahl der Kombinationsmöglichkeiten der verschiedenen Frequenzen zudem noch vervielfacht. Dies führt dazu, dass die Intensitäten der einzelnen Laserstrahlen über den zeitlichen Scanverlauf nicht periodisch konstant bleiben und somit eine konstante gleichmäßige Energieverteilung der aufgespalteten Strahlen nicht strahlen über den zeitlichen Scanverlauf nicht periodisch konstant bleiben und somit eine konstante gleichmäßige Energieverteilung der augespalteten Strahlen nicht gewährleistet werden kann.

Ferner kann das Problem auftreten, dass selbst leichte Unterschiede zwischen der Laserquelle und einer zusätzlichen Strahlquelle, z.B. bezüglich der Wellenlänge, zu einem Unterschied bezüglich des Bragg-Winkels des gebeugten Strahls führen, was zu einer Verschiebung des Fokuspunkts des Laserstrahls führt und sich störend auf den Schreib- bzw. Belichtungsprozess in einem Laserdrucker bzw. einem Laserlithographiesystem auswirkt.

Auch wenn ein Korrektursignal in Abhängigkeit der Anzahl der verwendeten Laserstrahlen berechnet wird, verbleibt der Effekt erhalten, dass aufgrund der Überlagerung der einzelnen Frequenzen Schwebungsphänomene auftreten, die eine zeitliche Energieschwankung unabhängig von der Anzahl der verwendeten Laserstrahlen erzeugen und sich so störend auf den Schreib- bzw. Belichtungsprozess in einem Laserdrucker bzw. einem Laserlithographiesystem auswirken.

Der Erfindung liegt daher die Aufgabe zugrunde, die Vorrichtung der genannten Art und ferner ein diesbezügliches Verfahren dahingehend weiterzubilden, dass die aufgezeigten Probleme und Schwierigkeiten einer verbesserten Lösung zugeführt werden. Ferner soll die Vorrichtung einen einfachen und funktionssicheren Aufbau aufweisen und / oder sicherstellen, dass unabhängig von der Anzahl der emittierten Strahlen die Intensität der einzelnen Strahlen konstant gehalten werden kann.

Des Weiteren soll erreicht werden, dass das der Abstand der erzeugten Strahlen unabhängig voneinander eingestellt werden kann.

Darüber hinaus soll erreicht werden, dass die Phasen der erzeugten Strahlen unabhängig voneinander variiert werden können.

Weiterhin soll erreicht werden, dass der Vorgang der Aufspaltung und der Vorgang der Modulation an unabhängig voneinander liegenden optischen Wegpunkten und / oder örtlich beabstandet durchführbar ist.

Auch soll erreicht werden, dass der Vorgang der Aufspaltung und der Vorgang der Modulation über eine elektronische Steuerung in einer festen zeitlichen Beziehung zueinander durchgeführt werden können.

Die Lösung dieser Aufgabe erfolgt gemäß den im Patentanspruch 1 angegebenen Merkmalen.

Die erfindungsgemäße Vorrichtung ermöglicht mit geringem konstruktivem Aufwand und gleichwohl hoher Funktionssicherheit, die von einer Strahlenquelle, insbesondere einer Lichtquelle und / oder einer Laserquelle emittierten Strahlen in eine beliebige Anzahl von Strahlen mit beliebig vorgebbarem Abstand zueinander aufzuspalten. Die nachfolgend erläuterten Vorteile und Funktionszusammenhänge gelten analog auch für das erfindungsgemäße Verfahren. Die Vorrichtung enthält bzw. das Verfahren nutzt ein akustisch-optisches Element, welches mit einer Vielzahl und / oder vorgegebener Anzahl elektrischer Signale mit unterschiedlichen Frequenzen betrieben wird, um die von der Strahlenquelle emittierten Strahlen in eine Vielzahl und / oder vorgegebene Anzahl von Strahlen aufzuspalten. Ferner ist ein Signalgenerator vorgesehen, der die elektrischen Signale mit den verschiedenen Frequenzen, die das akustisch-optische Element benötigt, erzeugt, zudem ein Schaltkreis, der es ermöglicht, die Intensitäten der einzelnen Laserstrahlen zu regulieren, ein optisches System, das die aufgespalteten Strahlen fokussiert in einem akustisch-optischen Modulator abbildet, sowie ein Schaltkreis, der es ermöglicht, die im akustisch-optischen Modulator fokussierten Strahlen zu modulieren. Zudem ist ein Schaltkreis vorgesehen, der es ermöglicht, die Intensitäten der einzelnen Lichtstrahlen nach der Modulation zu regulieren, sowie bevorzugt ein Triggerschaltkreis, der es ermöglicht, die einzelnen Vorgänge in den akustisch-optischen Komponenten, insbesondere über die beiden dem Triggerschaltkreis nachgeschalteten Signalgeneratoren, zeitlich aufeinander abzustimmen.

Die erfindungsgemäß Vorrichtung enthält insbesondere folgende Komponenten, welche im Rahmen der Erfindung bedarfsweise durch andere Komponenten mit im Wesentlichen übereinstimmenden Funktionsweisen austauschbar sind und/oder in der auf den jeweiligen Anwendungsfall abgestimmten Weise alle zusammen oder in einer besonderen Auswahl zum Teil mit einander kombinierbar sind.
- Ein akustisch-optisches Element, welches mit einer Vielzahl elektrischer Signale mit unterschiedlichen und / oder vorgebbaren Frequenzen betrieben wird, um die von einer Strahlenquelle emittierte monochromatische kohärente elektromagnetische Strahlung, insbesondere Licht einer Laserquelle, in eine Vielzahl von Strahlen aufzuspalten.
- Einen Signalgenerator, welcher die elektrischen Signale mit den verschiedenen Frequenzen erzeugt, welche das akustisch-optische Element benötigt.
- Einen Schaltkreis, der es ermöglicht, die Intensitäten der einzelnen Strahlen, insbesondere Laserstrahlen, im akustisch-optischen Element zu regulieren und / oder zu steuern oder zu regeln, nachfolgend auch als Schaltkreis zur Intensitätskontrolle bezeichnet.
- Einen Schaltkreis, der es ermöglicht, die Phasen der einzelnen Frequenzen zueinander im akustisch-optischen Element zu regulieren und / oder zu steuern oder zu regeln, nachfolgend auch als Phasenmodulationsschaltkreis bezeichnet.
- Ein optisches System, welches die aufgespalteten Strahlen, insbesondere Laserstrahlen, bevorzugt fokussiert abbildet.
- Einen akustisch-optischen Modulator, der es ermöglicht, die einzelnen bevorzugt fokussierten Teilstrahlen, insbesondere Laserstrahlen, über einen Schaltkreis, welcher von einem weiteren Signalgenerator gespeist wird, getrennt voneinander zu modulieren.
- Einen Schaltkreis, der es ermöglicht, die Intensitäten der einzelnen Strahlen, insbesondere Laserstrahlen, während der Modulation zu regulieren und / oder zu steuern oder zu regeln, nachfolgend auch als Schaltkreis zur Intensitätskontrolle bezeichnet.
- Einen Triggerschaltkreis, der es ermöglicht, die einzelnen Vorgänge in dem akustisch-optischen Element sowie dem akustisch-optischen Modulator zeitlich aufeinander abzustimmen und/oder zu synchronisieren.

Erfindungsgemäß wird erreicht, dass zunächst getrennt vom eigentlichen Modulationsprozess eine beliebige Anzahl von Strahlen, insbesondere Laserstrahlen, erzeugt werden, um diese über eine Intensitäts- und / oder Phasenanpassung energetisch zu optimieren. Dadurch können zwar keine Schwebungsprozesse verhindert werden, durch die zeitliche Abstimmung über einen Triggerprozess treten jedoch Energieschwankungen aufgrund von Schwebungen zwischen den verschiedenen Frequenzen immer zum selben Zeitpunkt nach einem Triggersignal auf. Dies hat zur Folge, dass zwar eine zeitliche Energieschwankung aufgrund der Schwebung zwischen den verschiedenen Frequenzen auftritt, diese aber immer zum gleichen Zeitpunkt nach dem Triggersignal gleich stark ausfällt.

Dies ermöglicht es, die zeitliche Schwankung der Energie aufgrund der Schwebung zwischen den verschiedenen Frequenzen im akustisch-optischen Element im nachgeschalteten akustisch-optischen Modulator über den Schaltkreis zur Intensitätskontrolle zu regulieren. Da die Zeit, in der ein Laserstrahl, z.B. in einem Laserdrucker bzw. einem Laserlithografiesystem gescannt wird, über den Scanbereich festgelegt ist, ist sowohl die Zeitdauer zwischen zwei Triggersignalen als auch die Länge der Triggersignale eine feste Größe. Daher muss die Korrektur der zeitlichen Schwankung der Energie, die im nachgeschalteten akustisch-optischen Modulator durchgeführt wird, nur einmal eingestellt werden und kann danach erfindungsgemäß periodisch mit dem Triggersignal wiederholt werden. Daher ist es nicht notwendig, die zeitliche Schwankung der Energie während dem gesamten Druck- bzw.- Belichtungsvorgang oder sonstigen Vorgängen des jeweiligen Anwendungsfalles aufzuzeichnen, und eine aufwändige in situ Energieaufzeichnung entfällt.

Besondere Weiterbildungen und Ausgestaltungen sind in den Unteransprüchen sowie der nachfolgenden Beschreibung eines besonderen Ausführungsbeispiels der Erfindung angegeben und gelten analog für das erfindungsgemäße Verfahren.

Die Erfindung wird nachfolgend anhand des in der Zeichnung dargestellten Ausführungsbeispiels näher erläutert, ohne dass insoweit eine Einschränkung erfolgt. Es zeigen:
- Fig. 1: eine schematische Prinzipdarstellung der Vorrichtung und eine besondere Anwendung derselben,
- Fig. 2: Diagramme bzw. Kurven 2A bis 2F von Schwingungen mit unterschiedlichen Frequenzen, wobei Frequenzamplituden und Strahlenenergie über der Zeit aufgetragen sind.

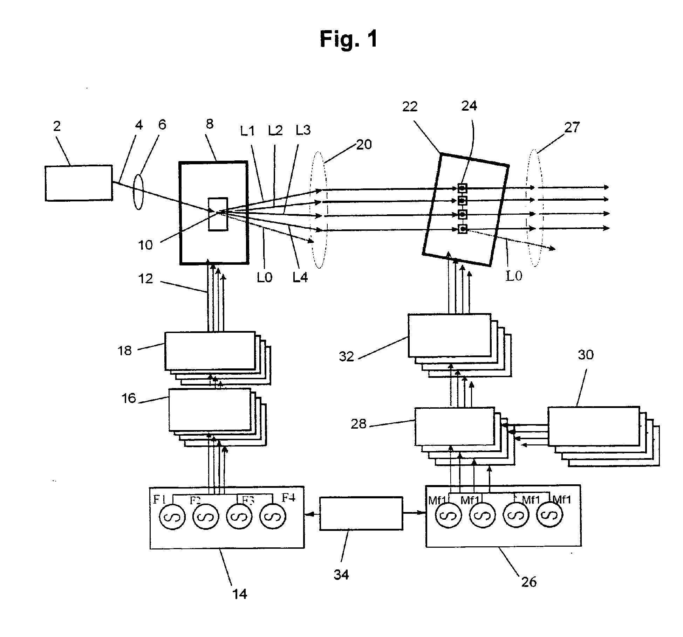

Fig. 1 zeigt die erfindungsgemäße Vorrichtung zur Aufspaltung und Modulation von Strahlen, mit einer Strahlenquelle 2, mittels welcher eine monochromatische kohärente elektromagnetische Strahlung erzeugt wird. Die Strahlenquelle und / oder Lichtquelle ist insbesondere als eine Laserquelle einer beliebig vorgebbaren Laserwellenlänge ausgebildet. Obgleich nachfolgend der Einfachheit halber lediglich eine Laserquelle bzw. Laserlicht beschrieben werden, sei ausdrücklich festgehalten, dass hierdurch keine Beschränkung der Erfindung erfolgt. Der Laserstrahl 4 wird über eine Linse bzw. ein Linsensystem bzw. allgemein ein optisches System 6, in ein akustisch-optisches Element 8 eingekoppelt, das aus einem der Wellenlänge der Laserquelle 2 angepassten Material wie z.B. einem Quarzkristall, TeO₂, ZnO, LiNbO₃, PbMoO₄, As₂O₃, GaAs usw. besteht. Das Linsensystem 6 kann dabei bevorzugt derart gewählt und / oder ausgebildet werden, dass es die optimalen Rahmenbedingungen für die Verwendung eines akustisch-optischen Elements 8 bezüglich Strahldurchmesser, Strahlform usw. erfüllt. Der Kristall des Elements 8 ist mit einem Signalgeber 10 verbunden, und welcher ermöglicht, mehrere hochfrequente elektrische Signale 12 unterschiedlicher Frequenzen, die von einem Hochfrequenz-Signalgenerator 14 erzeugt werden, in den Kristall einzuspeisen. Die hochfrequenten elektrischen Signale erzeugen im Kristall akustische Wellen, die den Brechungsindex des Materials periodisch in Abhängigkeit ihrer Frequenz ändern und so ein Beugungsgitter erzeugen. Wenn der eingestrahlte Laserstrahl den Bereich des Kristalls passiert, in dem die akustischen Wellen erzeugt werden, kommt es zu einer akusto-optischen Wechselwirkung zwischen dem Laserstrahl 4 und den akustischen Wellen, was schließlich zu einer Beugung des eingestrahlten Laserstrahls 4 führt. Die Stärke der Beugung des Laserstrahls 4 hängt von der Wellenlänge der in den Kristall eingespeisten Frequenz gemäß der sogenannten Bragg-Bedingung ab. Die Bragg-Bedingung besagt, dass wenn Licht der Wellenlänge λ an einem Gitter mit der Gitterkonstanten d, in diesem Fall an dem Beugungsgitter, das durch die akusto-optischen Wellen erzeugt wird, gestreut wird, unter einem Winkel Θ eine Beugung des Lichts gemäß der Bragg-Beziehung nλ = 2d sin Θ beobachtet (n steht dabei für eine natürliche Zahl) werden kann.

Werden mehrere akustische Frequenzen an das akustisch-optische Element 8 angelegt, beispielsweise vier Frequenzen, wobei aber selbstverständlich beliebig viele möglich sind, so führt dies zu einer Aufspaltung des einfallenden Laserstrahls 4 gemäß der Anzahl der eingespeisten Frequenzen. Zusätzlich tritt noch ein weiterer Strahl L0 (Strahl 0.Ordnung) auf, der auf der Bahn des ungebeugten Laserstrahls 4 verläuft und ausgeblendet werden kann, da er für die Anwendung von keinerlei Bedeutung ist. Wie dargestellt, werden vier elektrische Signale F1,F2,F3,F4 vom Signalgenerator 14 erzeugt, was zur Aufspaltung des Laserstrahls in vier Teilstrahlen L1 ,L2,L3,L4 und dem Strahl L0 führt. Die Frequenz der eingespeisten elektrischen Signale bestimmt gemäß der Bragg-Bedingung den Winkel der Aufspaltung der Laserstrahlen. Zusätzlich ist es jedoch möglich, über eine Regelung der Amplituden der verwendeten Frequenzen mittels eines Schaltkreises 16 zur Intensitätskontrolle die Stärke bzw. die Intensitäten der erzeugten Strahlen L1,L2,L3,L4 zu regulieren.

Bei der Überlagerung mehrerer unterschiedlicher Frequenzen kommt es immer zu sogenannten Schwebungsphänomenen. Überlagern sich z.B. Schwingungen zweier nicht allzu verschiedener Frequenzen, so ändert sich die Amplitude der Überlagerungsschwingung periodisch mit der sogenannten Schwebungsfrequenz. Überlagern sich mehrere Frequenzen, führt dies in der oben beschrieben Anwendung zu einer zeitlichen Veränderung der Signalamplituden der einzelnen Teilstrahlen L1,L2,L3,L4. Um diesen Effekt zu reduzieren, wird zusätzlich zur Intensitätskontrolle in bevorzugter Weise zwischen dem Signalgenerator 14 und dem Element 8 ein Schaltkreis 18 zur Phasenmodulation eingesetzt, der es ermöglicht, die Phasen der einzelnen Frequenzen unabhängig sowie miteinander gekoppelt zu verschieben, um so die zeitliche Schwankung der Signalamplituden der einzelnen Teilstrahlen L1 ,L2,L3,L4 zu minimieren.

Die mittels des akustisch-optischen Elements 8 erzeugten Laser-Teilstrahlen L1,L2,L3,L4 treffen danach auf eine zweite Linse bzw. ein zweites Linsensystem bzw. optisches System 20, deren Brennweite dem Abstand zwischen dem Linsenmittelpunkt und dem Zentrum der akustischen Wellenfront im akustisch-optischen Element 8 entspricht. Durch diese optische Anordnung entstehen hinter der Linse 20 vier Laserstrahlen, deren Abstand im Wesentlichen nur von der Brennweite der Linse 20 bzw. dem optischen System und dem Frequenzabstand der elektrischen Signale abhängt. Über eine Veränderung der Frequenzabstands der elektrischen Signale ist es daher möglich, den Abstand der Strahlen L1 ,L2,L3,L4 zu variieren. Diese vier Laser-Teilstrahlen werden hinter der Linse 20 im Abstand der Brennweite der Linse 20 fokussiert abgebildet. An dieser Stelle befindet sich wie dargestellt, ein akustisch-optischer Modulator 22. Der akustisch-optische Modulator 22 ist ausgerüstet mit vier Signalgebern 24, deren Abstand dem Strahlabstand der Teilstrahlen L1,L2,L3,L4 angepasst ist und die es ermöglichen, je ein hochfrequentes elektrisches Signal gleicher Frequenz, das von einem zweiten Hochfrequenz-Signalgenerator 26 erzeugt wird, in den Kristall einzuspeisen. Anstelle des akustisch-optischen Modulators 22 mit vier Signalgebern können im Rahmen der Erfindung auch vier getrennte akustisch-optische Modulatoren mit je einem Signalgeber und einem akustisch-optischen Kristall verwendet werden. Es ist von besonderer Bedeutung, dass der akustisch-optische Modulator 22 in einem vorgegebenen Abstand zum akustisch-optischen Element 8 angeordnet ist, so dass die Aufspaltung in die Teilstrahlen einerseits und die Modulation derselben andererseits unabhängig voneinander durchführbar sind, wobei bevorzugt im Strahlengang zwischen dem akustisch-optischen Element 8 und dem akustisch-optischen Modulator 22 das optische System 20 angeordnet ist.

Die Funktionsweise des akustisch-optischen Modulators 22 entspricht der des akustisch-optischen Elements 8 und jener besteht aus einem der Wellenlänge der Laserquelle 2 angepassten Material, wie z.B. einem Quarzkristall, TeO₂, ZnO, LiNbO₃, PbMoO₄, As₂O₃, GaAs. Die hochfrequenten elektrischen Signale erzeugen im Kristall akustische Wellen, die den Brechungsindex des Materials periodisch in Abhängigkeit ihrer Frequenz ändern und so ein Beugungsgitter erzeugen. Wenn die eingestrahlten Laser-Teilstrahlen L1,L2,L3,L4 den Bereich des Kristalls passieren, in dem die akustischen Wellen erzeugt werden, kommt es zu einer akusto-optischen Wechselwirkung zwischen dem jeweiligen Teilstrahl und den akustischen Wellen, was schließlich zu einer Beugung der eingestrahlten Teilstrahlen führt. Die Stärke der Beugung des Laserstrahls hängt dabei von der Wellenlänge und der Amplitude der in den Kristall eingespeisten Frequenzen ab. Zusätzlich tritt wieder pro Signalgeber ein weiterer Strahl L0, nullter Ordnung auf, der ausgeblendet werden kann, da er für die Anwendung von keinerlei Bedeutung ist. Dem Modulator 22 ist eine weitere Linse oder Linsensystem 27 nachgeordnet.

Die im Hochfrequenz-Signalgenerator 26 erzeugten Signale werden erfindungsgemäß mittels eines einzelnen bzw. einzigen Taktgebers erzeugt, um zu gewährleisten, dass sowohl die Frequenz als auch die Phase der vier hochfrequenten elektrischen Signale Mf1, die für die vier Signalgeber 24 erzeugt werden, übereinstimmt. Der akustisch-optische Modulator 22 wird in der beschriebenen Anwendung als Schalter verwendet, der es ermöglicht, z.B. in Laserdruckern bzw. Laserlithografiemaschinen die Laserstrahlen mit einer hohen Geschwindigkeit, die nur von der vom Signalgenerator 26 erzeugten Frequenz des elektrischen Signals (normalerweise im hohen MHz-Bereich) abhängt, ein- bzw. auszuschalten. Der Ein- bzw. Ausschaltvorgang wird über einen Modulationsschaltkreis 28 geregelt, der über einen Bildverarbeitungsprozessor 30 kontrolliert wird, der ein Bildsignal liefert. Auf diese Weise können die abzubildenden Strukturen beispielsweise in einem Laserdrucker bzw. einer Laserlithografiemaschine, an eine Scanvorrichtung weitergegeben werden, die schließlich die abzubildende Struktur erzeugt.

Da es aufgrund kleiner Abweichungen in den optischen Komponenten und den unterschiedlichen optischen Wegstrecken, welche die Strahlen in der Vorrichtung zurücklegen, zu Abweichungen in der Intensitätsverteilung der Strahlen L1,L2 ,L3,L4 kommen kann, kann die Energie der einzelnen Strahlen im akustisch-optischen Modulator 22 zusätzlich jeweils über einen Schaltkreis 32 zur Intensitätskontrolle reguliert werden. Ein zusätzlicher Triggerschaltkreis 34 ermöglicht erfindungsgemäß außerdem, die Vorgänge im akustisch-optischen Element 8 und im akustisch-optischen Modulator 22 zeitlich aufeinander abzustimmen und/oder zu synchronisieren. In modernen Laserdruckern bzw. Laserlithografiesystemen ist die Zeitdauer, die ein einzelner Laserscan benötigt , durch das scannende Element fest vorgegeben. Dies bedeutet, dass in einem festen periodischen Abstand immer wieder Scans der gleichen Länge d.h. des gleichen zeitlichen Intervalls ausgelöst werden. Dies wird von der erfindungsgemäßen Vorrichtung ausgenutzt. Zunächst werden die Energien der im akustisch-optischen Element 8 aufgespalteten Laserstrahlen L1,L2,L3,L4 mittels des Schaltkreises 16 zur Intensitätskontrolle aufeinander angepasst, so dass vier Laserstrahlen L1 ,L2,L3,L4 mit gleicher Energie erzeugt werden. Diese vier Laserstrahlen besitzen aufgrund der oben beschriebenen Schwebungsphänomene eine zeitliche Energieschwankung, die mit Hilfe des Phasenmodulationsschaltkreises 18, minimiert werden kann. Da das akustisch-optische Element 8 über den Triggerschaltkreis 34 immer im gleichen zeitlichen Abstand periodisch geschaltet wird, treten die Schwebungsphänomene und die damit verbundenen Energieschwankung immer zum gleichen Zeitpunkt nach dem Auslösen des Triggersignals auf. Dies ermöglicht es, die Energie der einzelnen Strahlen L1,L2,L3,L4 über den akustisch-optischen Modulator 22, der ebenfalls über den Triggerschaltkreis 34 gesteuert und/oder synchronisiert wird, zu kontrollieren und somit vier modulierbare Laserstrahlen mit konstanten gleichen Energien zu erzeugen.

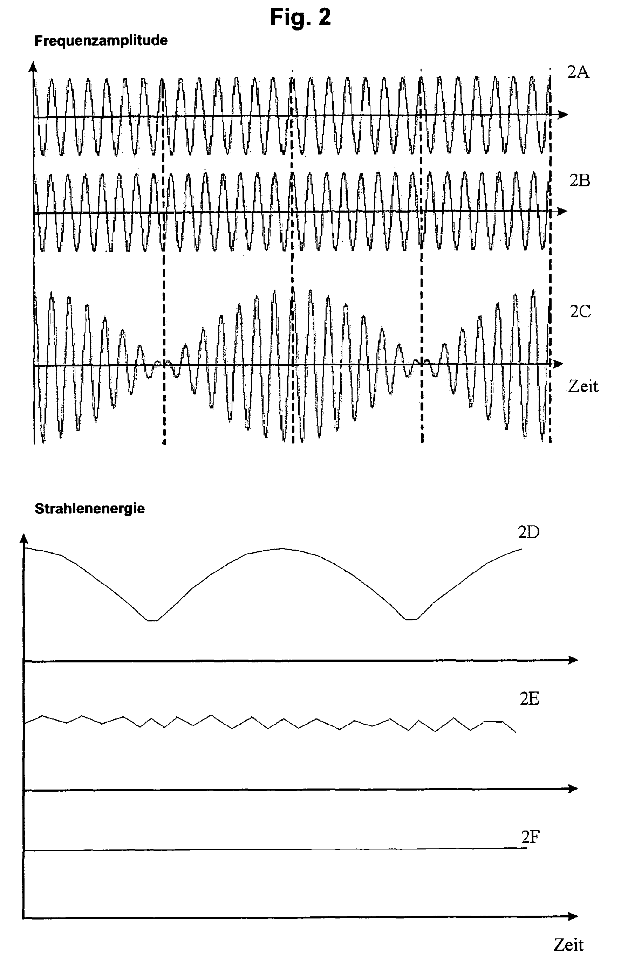

In Fig. 2 ist der gesamte Vorgang der Entstehung der Schwebungseffekte sowie die Korrektur dieser Effekte durch die verschiedenen in Fig. 1 dargestellten Schaltkreise vereinfacht für den vereinfachten Fall von zwei Frequenzen dargestellt. Die erfindungsgemäße Funktionsweise bleibt aber für jede beliebige Anzahl von verwendeten Frequenzen gleich. Die Kurven 2A und 2B zeigen zwei Schwingungen zweier nicht allzu verschiedener Frequenzen. Überlagern sich diese Schwingungen, so ändert sich die Amplitude der Überlagerungsschwingung gemäß Kurve 2C periodisch mit der sogenannten Schwebungsfrequenz, und es entstehen periodisch Maxima und Minima der Frequenzamplitude. Dies hat zur Folge, dass die gemäß Fig. 1 hinter dem akustisch-optischen Element 8 entstehenden Laserstrahlen eine Energieschwankung gemäß der Frequenzschwebung aufweisen, d.h. die Energie der einzelnen Strahlen schwankt ebenso periodisch wie mit Kurve 2D dargestellt. Mit Hilfe des Schaltkreises zur Phasenmodulation 18 ist es möglich, die Phasen der einzelnen Frequenzen gegeneinander zu verschieben und so die Schwankungen der Frequenzamplituden bzw. der Laserenergien zu minimieren. Den gleichen Effekt erzielt auch der Schaltkreis zur Intensitätskontrolle 16, mit dem die Frequenzamplitude jeder einzelnen Frequenz gezielt so verändert werden kann, dass die Schwankungen der Überlagerungsschwingung und damit die Energieschwankungen der einzelnen Strahlen minimiert wird. Die Korrekturen mittels des Schaltkreises 18 zur Phasenmodulation und / oder des Schaltkreises 16 zur Intensitätskontrolle ermöglichen es somit, die Energie der einzelnen Strahlen über den gesamten Zeitraum bis auf leichte Energieschwankungen nahezu konstant zu halten, gemäß Kurve 2E. Da die Steuerung des akustisch-optischen Elements 8 mittels eines Triggerschaltkreises 34 reguliert wird, treten die in Kurve 2E dargestellten leichten Energieschwankungen immer zum gleichen Zeitpunkt nach dem Triggersignal auf, d.h. die Schwankungen sind zeitlich exakt festgelegt. Dies ermöglicht es, die Schwankungen mit Hilfe des nachgeschalteten akustisch-optischen Modulators 22 und / oder des Schaltkreises 32 zur Intensitätskontrolle, der erfindungsgemäß ebenfalls über den Triggerschaltkreis 34 geregelt oder gesteuert wird, zu korrigieren. Mittels dieser Korrektur werden schließlich Strahlen mit konstanter Energie erzeugt, die keine zeitliche Energieschwankung aufweisen, wie mit der Kurve 2F dargestellt.

Die Erfindung hat gegenüber Vorrichtungen zur Aufspaltung und Modulation von Laserstrahlen mit nur einem einzelnen akustisch-optischen Element, in dem gleichzeitig die Aufspaltung der Laserstrahlen und die Modulation abläuft, erhebliche Vorteile. Insbesondere wird erreicht, dass beim Aufspaltungsprozess kein periodisch wiederkehrendes Signal erzeugt wird und sich aufgrund des sich ständig zeitlich ändernden Ablaufs der Aufspaltung und der ändernden Anzahl der anliegenden Frequenzen, die Schwebungsphänomene bzw. die Energieverteilung der einzelnen Laserstrahlen ständig und nicht vorhersagbar ändern. Insoweit war bisher eine in situ Aufzeichnung der Energie der einzelnen Strahlen bzw. einer dazu proportionalen Größe erforderlich, verbunden mit einem erheblichen technischen Aufwand. Dieser Aufwand entfällt bei der an Hand von Fig. 1 beschriebenen Vorrichtung zur Aufspaltung und Modulation von Laserstrahlen. Da die Energieschwankungen der einzelnen Strahlen L1,L2,L3,L4 periodisch im immer gleichen Zeitabstand nach dem Triggersignal auftreten, müssen die auftretenden Energieschwankungen der einzelnen Strahlen nur einmal gemessen werden und mittels des Schaltkreises 32 zur Intensitätskontrolle korrigiert werden. Diese Korrektur kann danach zeitlich korreliert über das Triggersignal des Triggerschaltkreises 34 immer wieder in den akustisch-optischen Modulator 22 eingespeist werden, so dass eine in situ Aufzeichnung der Energieschwankungen der einzelnen Strahlen L1,L2,L3,L4 überflüssig wird. Ein weiterer Vorteil besteht bei der an Hand von Fig. 1 beschriebenen Erfindung darin, dass die Orte in denen die Aufspaltung des Laserstrahls (das akustisch-optische Element 8) und die Modulation der einzelnen Strahlen (der akustisch-optische Modulator 22) stattfinden, geometrisch voneinander getrennt sind. Dies ermöglicht es, über eine geeignete Wahl der Linsensysteme 6, 20, 27 den Strahlengang an die zur Ausleuchtung des akustisch-optischen Element 8 und / oder des akustisch-optischen Modulators 22 notwendigen optischen Randbedingungen optimal anzupassen. Dies ist bei Systemen, in denen der Aufspaltvorgang und der Modulationsvorgang in einem Schritt erfolgt, nicht möglich, so dass immer nur ein Kompromiss zwischen den einzelnen optischen Randbedingungen gefunden werden kann, was zu einer Verminderung der Effektivität der einzelnen akustisch-optischen Komponenten führt.

Auch wenn die vorliegende Erfindung wie in der oben beschrieben Anwendung im Bereich der Laserdrucker und der Laserlithografie eingesetzt werden kann, so ergeben sich doch eine Vielzahl von anderen Anwendungsbereichen in denen die oben beschriebene Vorrichtung verwendet und die vorliegende Erfindung mit einbezogen werden kann.

Die beschriebene Vorrichtung zur Aufspaltung und Modulation von Strahlen, insbesondere Laserstrahlen, kann außerdem eingesetzt werden, um Licht in parallele unabhängig voneinander schaltbare Lichtstrahlen mit einstellbarer Energie aufzuspalten und in optische Systeme wie z.B. ein Glasfasersystem zur Datenübertragung, insbesondere mittels des weiteren Linsensystems 27 einzukoppeln.

Die beschriebene Vorrichtung zur Aufspaltung und Modulation von Laserstrahlen kann außerdem eingesetzt werden, um Licht in parallele unabhängig voneinander schaltbare Lichtstrahlen mit einstellbarer Energie aufzuspalten und in optische Systeme wie z.B. laseraktive Medien einzukoppeln, um die Emission mehrerer paralleler Laserstrahlen anzuregen.

Auch wenn die vorliegende Erfindung wie in den oben beschrieben Anwendungen verwendet werden kann, so sind doch auch eine Vielzahl von Veränderungen und Modifikation der vorliegenden Erfindung möglich, die die vorliegende Erfindung mit einbezieht.

In der oben beschriebenen Erfindung ist es nicht zwingend notwendig, dass die akustisch-optischen Komponenten aus massiven Kristallen aufgebaut sind, es sind ebenfalls dünne Schichten des gleichen optisch aktiven Materials einsetzbar, wie sie z.B. über eine Laserablationsmethode oder andere Methoden zur Herstellung dünner Schichten erzeugt werden können.

In der oben beschriebenen Erfindung ist es nicht zwingend notwendig, den einfallenden Laserstrahl in vier Teilstrahlen aufzuspalten, vielmehr kann der Laserstrahl in jede beliebige Anzahl von Strahlen aufgeteilt werden. Die Anzahl der hochfrequenten elektrischen Signale erhöht sich dabei der Anzahl der Teilstrahlen entsprechend. In Abhängigkeit von der Anzahl der erzeugten Teilstrahlen ist es außerdem möglich, mittels des akustisch-optischen Modulators eine beliebige Anzahl von Teilstrahlen zu modulieren. Die Anzahl der hochfrequenten elektrischen Signale und der verwendeten Signalgeber erhöht sich dabei der Anzahl der Teilstrahlen entsprechend.

Schließlich sei ausdrücklich festgehalten, dass es in der oben beschriebenen Erfindung nicht zwingend notwendig ist, Laserlicht zu verwenden. Jede monochromatische kohärente elektromagnetische Strahlung lässt sich auf diese Weise aufspalten und modulieren, solange das Material der optischen Komponenten der Wellenlänge der elektromagnetischen Strahlung angepasst wird.

### Bezugszeichen

- 2: Strahlenquelle / Laserquelle
- 4: Strahl 1 Laserstrahl / optisches System
- 6: Linse / Linsensystem
- 8: akustisch-optisches Element
- 10: Signalgeber
- 12: elektrisches Signal
- 14: Hochfrequenz-Signalgenerator
- 16: Schaltkreis zur Intensitätskontrolle
- 18: Schaltkreis zur Phasenmodulation / Phasenmodulationsschaltkreis
- 20: zweite Linse / Linsensystem / optisches System
- 22: akustisch-optischer Modulator
- 24: Signalgeber von 22
- 26: zweiter Hochfrequenz-Signalgenerator
- 27: weitere Linse / Linsensystem / optisches System
- 28: Modulationsschaltkreis
- 30: Bildverarbeitungsprozessor
- 32: Schaltkreis zur Intensitätskontrolle
- 34: Triggerschaltkreis

- F1,F2,F3,F4: elektrische Signale
- L0: Strahl 0. Ordnung
- L1,L2,L3,L4: Teilstrahlen
- Mf1: zusätzliches elektrisches Signal

## Patentansprüche

1. Vorrichtung, mittels welcher eine optische Aufspaltung und Modulation von monochromatischer kohärenter elektromagnetischer Strahlung durchgeführt wird, enthaltend eine Strahlenquelle (2), mittels welcher ein Strahl (4) erzeugt wird, ein akustisch-optisches Element (8), welches von elektrischen Signalen (12) eines enthaltenen Signalgenerators (14) beaufschlagt wird und mit welchem eine Strahlaufteilung in eine Anzahl von Teilstrahlen durchgeführt wird, und ferner enthaltend einen akustisch-optischen Modulator (22), welcher mit hochfrequenten elektrischen Signalen (Mf1) angesteuert wird,
wobei
das akustisch-optische Element (8) im Strahlengang zwischen der Strahlenquelle (2) und dem akustisch-optischen Modulator (22) angeordnet ist, wobei mittels des akustisch-optischen Elements (8) der Strahl (4) in die Teilstrahlen (L1, L2, L3, L4) aufgespalten wird,
**dadurch gekennzeichnet, dass** diese Teilstrahlen (L1, L2, L3, L4) dem akustisch-optischen Modulator (22) zugeführt werden,
und dass zwischen dem Signalgenerator (14), welcher elektrische Signale (F1, F2, F3, F4) mit unterschiedlichen Frequenzen erzeugt, und dem akustisch-optischen Element (8) ein Phasenmodulationsschaltkreis (18) angeordnet ist, mit welchem die Phasen der elektrischen Signale (F1, F2, F3, F4) des genannten Signalgenerators (14) unabhängig sowie miteinander gekoppelt derart verschoben werden, dass mittels der somit gebildeten elektrischen Signale (12) eine zeitliche Schwankung der Signalamplituden der einzelnen Teilstrahlen (L1, L2, L3, L4) minimiert wird.

2. Vorrichtung nach Anspruch 1, **dadurch gekennzeichnet, dass** im Strahlengang zwischen dem akustisch-optischen Element (8) und dem akustisch-optischen Modulator (22) ein optisches System (20) angeordnet ist, mit welchem eine Abbildung der Teilstrahlen (L1, L2, L3, L4) in oder auf den akustisch-optischen Modulator (22) erfolgt.

3. Vorrichtung nach Anspruch 1 oder 2, **dadurch gekennzeichnet, dass** der akustisch-optische Modulator (22) Signalgeber (24) enthält beziehungsweise aus einer Anzahl von akustisch-optischen Modulatoren mit Signalgebern (24) besteht, wobei die Abstände der Signalgeber (24) an die Abstände der Teilstrahlen (L1, L2, L3, L4) an den Ort ihres Zusammentreffens angepasst sind und wobei mittels der Signalgeber (24) hochfrequente elektrische Signale (Mf1) in einen oder mehrere Kristalle des akustisch-optischen Modulators (22) eingespeist werden.

4. Vorrichtung nach einem der Ansprüche 1 bis 3, **dadurch gekennzeichnet, dass** ein Hochfrequenz-Signalgenerator (26) vorhanden ist, wobei mit einem einzigen Taktgeber von diesem die sowohl in der Frequenz als auch in der Phasenlage übereinstimmenden hochfrequenten elektrischen Signale (Mf1) für den akustisch-optischen Modulator (22) erzeugt werden.

5. Vorrichtung nach Anspruch 4, **dadurch gekennzeichnet, dass** zwischen dem Hochfrequenz-Signalgenerator (26) und dem akustisch-optischen Modulator (22) ein Modulationsschaltkreis (28) und/oder ein Schaltkreis (32) zur Korrektur der Energieschwankungen der einzelnen Teilstrahlen (L1, L2, L3, L4) angeordnet sind, wobei zusätzliche Signale, insbesondere Bildsignale eines Bildverarbeitungsprozessors (30), dem Modulationsschaltkreis (28) zugeführt werden.

6. Vorrichtung nach Anspruch 4 oder 5, **dadurch gekennzeichnet, dass** ein Triggerschaltkreis (34) vorgesehen ist, mittels welchem sowohl der Hochfrequenz-Signalgenerator (26) als auch der Signalgenerator (14), mit welchem die Ansteuerung des akustisch-optischen Elements (8) erfolgt, angesteuert werden.

7. Vorrichtung nach Anspruch 6, **dadurch gekennzeichnet, dass** der Triggerschaltkreis (34) derart ausgebildet ist, dass die einzelnen Vorgänge sowohl in dem akustisch-optischen Element (8) als auch in dem akustisch-optischen Modulator (22) zeitlich aufeinander abgestimmt und/oder synchronisiert werden.

8. Vorrichtung nach einem der Ansprüche 1 bis 7, **dadurch gekennzeichnet, dass** zwischen dem Signalgenerator (14) und dem akustisch-optischen Element (8) ein Schaltkreis (16) angeordnet ist, mittels welchem die Energieschwankungen der einzelnen Teilstrahlen (L1, L2, L3, L4) minimiert werden.

9. Vorrichtung nach einem der Ansprüche 1 bis 8, **dadurch gekennzeichnet, dass** das akustisch-optische Element (8) und der akustisch-optische Modulator (22) räumlich getrennt und beabstandet zueinander angeordnet sind, wobei in dem akustisch-optischen Element (8) die Aufspaltung des Strahls (4) in die Teilstrahlen (L1, L2, L3, L4) und räumlich getrennt davon im akustisch-optischen Modulator (22) die Modulation der Teilstrahlen (L1, L2, L3, L4) durchgeführt wird.

10. Vorrichtung nach einem der Ansprüche 1 bis 9, **dadurch gekennzeichnet, dass** die monochromatische kohärente elektromagnetische Strahlung eine Lichtstrahlung oder Laserstrahlung ist.

## Claims

1. A device, by means of which an optical splitting and modulation of monochromatic coherent electromagnetic radiation is carried out, containing a radiation source (2), by means of which a beam (4) is generated, an acoustic-optical element (8), which is loaded by electrical signals (12) of a contained signal generator (14) and using which a beam splitting into a number of part beams is carried out, and further containing an acoustic-optical modulator (22), which is controlled using high-frequency electrical signals (Mf1),
wherein the acoustic-optical element (8) is arranged in the beam path between the radiation source (2) and the acoustic-optical modulator (22), wherein the beam (4) is split into the part beams (L1, L2, L3, L4) by means of the acoustic-optical element (8),
**characterised in that** these part beams (L1, L2, L3, L4) are fed to the acoustic-optical modulator (22),
and **in that** a phase modulation circuit (18) is arranged between the signal generator (14), which generates electrical signals (F1, F2, F3, F4) with different frequencies, and the acoustic-optical element (8), using which phase modulation circuit, the phases of the electrical signals (F1, F2, F3, F4) of the mentioned signal generator (14) are shifted independently and also coupled with one another such that a temporal fluctuation of the signal amplitudes of the individual part beams (L1, L2, L3, L4) is minimised by means of the electrical signals (12) thus formed.

2. The device according to Claim 1, **characterised in that** an optical system (20) is arranged in the beam path between the acoustic-optical element (8) and the acoustic-optical modulator (22), using which optical system the part beams (L1, L2, L3, L4) are imaged into or onto the acoustic-optical modulator (22).

3. The device according to Claim 1 or 2, **characterised in that** the acoustic-optical modulator (22) contains signalling devices (24) or consists of a number of acoustic-optical modulators with signal signalling devices (24), wherein the spacings of the signalling devices (24) are adapted to the spacings of the part beams (L1, L2, L3, L4) at the location of the coincidence thereof and wherein high-frequency electrical signals (Mf1) are fed into one or a plurality of crystals of the acoustic-optical modulator (22) by means of the signalling devices (24).

4. The device according to one of Claims 1 to 3, **characterised in that** a high-frequency signal generator (26) is present, wherein using a single clock pulse generator of the same, the high-frequency electrical signals (Mf1), which match both in terms of frequency and in terms of phase relation, are generated for the acoustic-optical modulator (22).

5. The device according to Claim 4, **characterised in that** a modulation circuit (28) and/or a circuit (32) for correcting the energy fluctuations of the individual part beams (L1, L2, L3, L4) are arranged between the high-frequency signal generator (26) and the acoustic-optical modulator (22), wherein additional signals, particularly image signals of an image processor (30), are fed to the modulation circuit (28).

6. The device according to Claim 4 or 5, **characterised in that** a trigger circuit (34) is provided, by means of which both the high-frequency signal generator (26) and the signal generator (14), using which the control of the acoustic-optical element (8) takes place, are controlled.

7. The device according to Claim 6, **characterised in that** the trigger circuit (34) is constructed such that the individual processes both in the acoustic-optical element (8) and in the acoustic-optical modulator (22) are temporally tuned and/or synchronised to one another.

8. The device according to one of Claims 1 to 7, **characterised in that** a circuit (16) is arranged between the signal generator (14) and the acoustic-optical element (8), by means of which circuit, the energy fluctuations of the individual part beams (L1, L2, L3, L4) are minimised.

9. The device according to one of Claims 1 to 8, **characterised in that** the acoustic-optical element (8) and the acoustic-optical modulator (22) are arranged spatially separately and spaced from one another, wherein the splitting of the beam (4) into the part beams (L1, L2, L3, L4) is carried out in the acoustic-optical element (8) and the modulation of the part beams (L1, L2, L3, L4) is carried out spatially separately therefrom in the acoustic-optical modulator (22).

10. The device according to one of Claims 1 to 9, **characterised in that** the monochromatic coherent electromagnetic radiation is light radiation or laser radiation.

## Revendications

1. Dispositif, au moyen duquel on effectue une division et modulation optiques d'un rayonnement électromagnétique cohérent monochromatique, comprenant une source de rayonnement (2) au moyen de laquelle un faisceau (4) est généré, un élément acoustico-optique (8) qui est alimenté par des signaux électriques (12) d'un générateur de signaux (14) incorporé, et au moyen duquel on effectue une division de faisceau en un certain nombre de faisceaux partiels, et comprenant en outre un modulateur acoustico-optique (22) qui est commandé grâce à des signaux électriques de haute fréquence (Mf1),
dans lequel l'élément acoustico-optique (8) est disposé dans le trajet de rayonnement entre la source de rayonnement (2) et le modulateur acoustico-optique (22), dans lequel, grâce à l'élément acoustico-optique (8), le faisceau (4) est scindé pour donner les faisceaux partiels (L1, L2, L3, L4),
**caractérisé en ce que** ces faisceaux partiels (L1, L2, L3, L4) sont amenés au modulateur acoustico-optique (22)
et **en ce qu'**un circuit de commutation de modulation de phase (18) est disposé entre le générateur de signaux (14) qui génère des signaux électriques (F1, F2, F3, F4) à différentes fréquences et l'élément acoustico-optique (8), à l'aide duquel circuit les phases des signaux électriques (F1, F2, F3, F4) du dénommé générateur de signaux (14) sont décalées indépendamment, tout comme couplées ensemble, de manière à ce que, grâce aux signaux électriques (12) ainsi formés, une variation temporelle des amplitudes de signaux des faisceaux partiels (L1, L2, L3, L4) individuels soit minimisée.

2. Dispositif selon la revendication 1, **caractérisé en ce que**, dans le trajet de rayonnement entre l'élément acoustico-optique (8) et le modulateur acoustico-optique (22), un système optique (20) est mis en place, au moyen duquel il s'en suit une reproduction des faisceaux partiels (L1, L2, L3, L4) dans, ou sur le modulateur acoustico-optique (22).

3. Dispositif selon la revendication 1 ou 2, **caractérisé en ce que** le modulateur acoustico-optique (22) comprend des transmetteurs de signaux (24) et/ou se compose d'un certain nombre de modulateurs acoustico-optiques avec des transmetteurs de signaux (24), dans lequel les espacements des transmetteurs de signaux (24) sont adaptés aux espacements des faisceaux partiels (L1, L2, L3, L4) sur le lieu de leur rencontre et dans lequel, au moyen des transmetteurs de signaux (24), des signaux électriques de haute fréquence (Mf1) alimentent un ou plusieurs cristaux du modulateur acoustico-optique (22).

4. Dispositif selon l'une des revendications 1 à 3, **caractérisé en ce qu'**il y a un générateur de signaux à haute fréquence (26), dans lequel, avec une seule horloge, celui-ci génère des signaux électriques de haute fréquence (Mf1) coïncidant en fréquence, tout comme également concernant leur position de phase, pour le modulateur acoustico-optique (22).

5. Dispositif selon la revendication 4, **caractérisé en ce que**, entre le générateur de signaux à haute fréquence (26) et le modulateur acoustico-optique (22), un circuit de commutation de modulation (28) et/ou un circuit de commutation (32) pour la correction des variations d'énergie des faisceaux partiels individuels (L1, L2, L3, L4) sont disposés, dans lequel des signaux supplémentaires, en particulier des signaux d'image d'un processeur de traitement d'images (30), sont amenés au circuit de commutation de modulation (28).

6. Dispositif selon la revendication 4 ou 5, **caractérisé en ce que** l'on prévoit un circuit de commutation de déclenchement (34) au moyen duquel le générateur de signaux à haute fréquence (26), tout comme également le générateur de signaux (14) à l'aide duquel s'effectue la commande de l'élément acoustico-optique (8), sont commandés.

7. Dispositif selon la revendication 6, **caractérisé en ce que** le circuit de commutation de déclenchement (34) est réalisé de manière à ce que les processus individuels dans l'élément acoustico-optique (8), tout comme également dans le modulateur acoustico-optique (22), soient harmonisés entre-eux de manière temporelle et/ou synchronisés.

8. Dispositif selon l'une des revendications 1 à 7, **caractérisé en ce qu'**un circuit de commutation (16) est disposé entre le générateur de signaux (14) et l'élément acoustico-optique (8), au moyen duquel circuit les variations d'énergie des faisceaux partiels (L1, L2, L3, L4) individuels sont minimisées.

9. Dispositif selon l'une des revendications 1 à 8, **caractérisé en ce que** l'élément acoustico-optique (8) et le modulateur acoustico-optique (22) sont disposés de manière séparée spatialement et à distance l'un de l'autre, dans lequel, dans l'élément acoustico-optique (8), on effectue la division du faisceau (4) pour donner les faisceaux partiels (L1, L2, L3, L4), et de manière séparée spatialement de cela, dans le modulateur acoustico-optique (22), la modulation des faisceaux partiels (L1, L2, L3, L4) étant effectuée.

10. Dispositif selon l'une des revendications 1 à 9, **caractérisé en ce que** le rayonnement électromagnétique cohérent monochromatique est un rayonnement lumineux ou un rayonnement laser.
